# EUROPÄISCHE PATENTSCHRIFT

(11) **EP 4 139 572 B1**
(45) Veröffentlichungstag und Bekanntmachung des Hinweises auf die Patenterteilung: **06.05.2026**
(21) Anmeldenummer: 21719903.3
(22) Anmeldetag: 16.04.2021
(51) Int. Cl.: F03G 7/06

(54) **ENERGIEWANDLER MIT EINER THERMOELASTISCHEN WANDLERANORDNUNG SOWIE VERFAHREN ZUR HERSTELLUNG EINER THERMOELASTISCHEN WANDLERANORDNUNG FÜR EINEN ENGERGIEWANDLER**
ENERGY CONVERTER HAVING A THERMOELASTIC CONVERTER ARRANGEMENT AND METHOD FOR PRODUCING A THERMOELASTIC CONVERTER ARRANGEMENT FOR AN ENERGY CONVERTER
CONVERTISSEUR D'ÉNERGIE DOTÉ D'UN ENSEMBLE CONVERTISSEUR THERMOÉLASTIQUE ET PROCÉDÉ DE FABRICATION D'UN ENSEMBLE CONVERTISSEUR THERMOÉLASTIQUE POUR UN CONVERTISSEUR D'ÉNERGIE

(30) Priorität: 20.04.2020 DE 102020110694
(43) Veröffentlichungstag der Anmeldung: 01.03.2023
(73) Patentinhaber: Universität des Saarlandes, 66123 Saarbrücken (DE)
(72) Erfinder: SEELECKE, Stefan, 66119 Saarbrücken (DE); KIRSCH, Susanne-Marie, 66693 Mettlach-Saarhölzbach (DE); WELSCH, Felix, 66280 Sulzbach/Saar (DE)
(74) Vertreter: Banse & Steglich Patentanwälte PartmbB
(86) Internationale Anmeldenummer: PCT/EP2021/059966
(87) Internationale Veröffentlichungsnummer: WO 2021/213933

(56) Entgegenhaltungen:
- WO-A1-2018/099565
- DE-A1- 102005 059 081
- DE-A1- 102009 040 523
- DE-A1- 2 922 626
- DE-B4- 102017 007 596
- US-A- 4 922 718
- US-A- 5 092 901

## Beschreibung

### Technisches Gebiet

Die Erfindung betrifft thermoelastische Wandleranordnungen, insbesondere für ein Aktorsystem eines Protagonist-Antagonist-Energiewandlersystems, insbesondere mit Stellaktoren, die durch thermoelastische Aktorelemente gestellt werden können.

### Technischer Hintergrund

Energiewandler mit aktiven Elementen aus einem thermoelastischen Material ermöglichen die Realisierung einer Umwandlung zwischen mechanischer und thermischer Energie.

Aus dem Stand der Technik sind zahlreiche Varianten zur Nutzung von thermoelastischen Anordnungen zur Kühlung von Fluiden bekannt, die allesamt auf einem zyklischen Verspannungs- und Entspannungsprozess eines thermoelastischen Materials basieren.

Zudem ermöglichen derartige thermoelastische Anordnungen die Realisierung von Aktoranordnungen. Als thermische Aktoranordnungen werden Aktoren mit thermoelastischen Aktorelementen bezeichnet, die durch Einwirkung von Wärme eine Stellbewegung hervorrufen können. Thermische Aktoranordnungen können beispielsweise mit thermoelastischen Aktorelementen ausgebildet sein, die ein thermoelastisches Material (auch als elastokalorisches oder mechanokalorisches Material bezeichnet) aufweisen. Derartige thermoelastische Materialien ändern ihre Mikrostruktur bei Einwirkung einer Temperaturänderung. Dadurch können thermoelastische Elemente bei Erwärmung ihre Abmessungen verringern bzw. eine Zugkraft ausüben. Im Falle einer Abkühlung nimmt das thermoelastische Element insbesondere bei Vorliegen einer entsprechenden Rückstellkraft die ursprüngliche Form wieder ein. Eine Gruppe gebräuchlicher thermoelastischen Materialien sind Formgedächtnislegierungen und Polymere, wie z.B. Kautschuk.

Thermische Aktoranordnungen werden in aller Regel zur variablen Verstellung eines Stellelements zwischen zwei definierten Stellpositionen verwendet, wie beispielsweise zur Ansteuerung eines Ventils. Ein Rückstellen von Stellaktoren ist in bestimmten Anwendungen zeitkritisch. So muss beispielsweise bei einem Ventilaktuator ein Schließen des Ventils im Falle einer Notabschaltung sehr schnell erfolgen. Die Verwendung eines thermischen Aktors, der durch eine Erwärmung von thermoelastischem Material aktivierbar ist, kommt für die Realisierung der Notabschaltungsfunktion nicht in Frage, da eine Rückstellung durch Abkühlen des thermoelastischen Materials aufgrund der langsamen Abkühlrate zu lange dauert. Andere Mechanismen zur schnellen Rückstellung des Aktors sind aufwändig und haben einen hohen Bauraumbedarf.

Darüber hinaus sind antagonistische thermische Aktoren bekannt, bei denen eine Rückstellbewegung durch ein weiteres thermoelastisches Element bewirkt wird.

Beispielsweise ist aus der Druckschrift DE 199 63 501 A1 ein Aktor für ein Stellglied bekannt, das zwischen einer Grundposition und einer Stellposition verstellbar ist. Der Aktuator weist gegeneinander wirkende Formgedächtniselemente auf, von denen ein erstes Formgedächtniselement bei Überschreiten einer bestimmten Temperatur in Richtung einer Stellposition und das zweite Formgedächtniselement entsprechend in Gegenrichtung wirksam ist.

Aus der Druckschrift US 8,707,694 B2 ist ein Aktuator mit einem ersten Formgedächtniselement bekannt, das eine Kraft auf ein Stellelement des Aktuators ausüben kann, und ein weiteres Formgedächtniselement umfasst, das eine Gegenkraft auf das Stellelement ausübt. Das Stellelement dient zum Betreiben eines Ventils, das durch selektives Ansteuern des ersten und zweiten Formgedächtniselementes aktiviert bzw. deaktiviert werden kann.

Auch aus der Druckschrift WO 2019/106340 ist ein thermoelastischer Aktuator mit einem thermoelastischen Draht und einem Stellglied bekannt, wobei der thermoelastische Draht zwischen einem statischen Teil und dem Stellglied angeordnet ist, um durch Kontraktion eine Bewegung des Stellglieds bezüglich des feststehenden Teils zu bewirken. Ferner ist ein Rückstellelement vorgesehen, das mit dem Stellglied verbunden ist, um das Stellglied zurückzustellen.

Darüber hinaus können thermoelastische Elemente aus parallel angeordneten Strangelementen ausgebildet sein, die z.B. in Form einer Wicklung hergestellt werden. Durch gleichzeitige Aktivierung (Temperaturbeaufschlagung oder Längenänderung) der Strangelemente können diese in einem Energiewandler verwendet werden, wobei sich die Höhe der umsetzbaren Energie sich mit der Anzahl der parallelen Strangelemente erhöht.

Aus der Druckschrift DE 10 2017 007 596 B4 ist beispielsweise eine solche Anordnung von parallelen strangförmigen Formgedächtniselementen dargestellt.

Bei der Herstellung solcher thermoelastischen Anordnungen mit einer Vielzahl von thermoelastischen Strangelementen besteht ein Problem darin, dass aufgrund von Toleranzen des Herstellungsprozesses die einzelnen Strangelemente der Anordnung unterschiedlichen Belastungen ausgesetzt sind. Dies führt zu einer unterschiedlichen Beanspruchung, die die Lebensdauern der einzelnen Strangelemente verschieden beeinflusst.

Die Druckschrift US 5,092,901 A1 offenbart ein Betätigungselement zur Erzeugung einer Arbeitskraft, umfassend eine modifizierte längliche Faser aus einer Formgedächtnislegierung, wobei die modifizierte Faser von einer unmodifizierten Faser abgeleitet ist, wobei die unmodifizierte Faser modifiziert wird, indem sie mehrmals einem kurzen, sehr starken elektromagnetischen Impuls ausgesetzt wird, um eine Kontraktion der Länge der nicht modifizierten Faser zu bewirken und die Materialeigenschaften zu verändern, während sie einer Streckkraft ausgesetzt ist, wobei die modifizierte Faser eine Zuckungsreaktion unter Stimulation durch ein Aktionspotential zeigt, wobei die Zuckungsreaktion eine Kontraktionszeit und eine Entspannungszeit umfasst, wobei die Zuckungsreaktion im Vergleich zur Zuckungsreaktion der nicht modifizierten Faser schnell ist.

Die Druckschrift DE 292 26 26 A1 offenbart eine Vorrichtung zum Umwandeln von Wärmeenergie in mechanische Arbeit, mit einer Anzahl von langgestreckten ein erstes und ein zweites Ende aufweisenden und auf Temperatur ansprechenden Elementen aus einem Werkstoff, der thermoelastischen, martensitischen Phasentransformationen unterliegt, mit einer Anlageeinrichtung, die mit den Elementen zum Anlegen einer Spannung an diese zu deren Belastung während einer ersten Phase zusammenwirkt und die auf ein Entspannen der Elemente während einer zweiten Phase anspricht, mit einer Abstützeinrichtung, die die ersten und die zweiten Enden der Elemente trägt, wobei die Abstützeinrichtung ausgebildet ist, um bei einer Relativbewegung Arbeit abzuführen, wenn die Elemente sich in einer zweiten Phase entspannen und in ihrer Länge kürzer werden. Es ist weiterhin eine Spannungsbegrenzungseinrichtung zwischen einem Ende jedes der Elemente und der Abstützeinrichtung zum Begrenzen der Belastung der Elemente während der Phasen vorgesehen.

Die Druckschrift US 4,922, 718 A offenbart eine thermische Energieabfanganordnung, die eine Vielzahl von integralen Elementen aus temperaturempfindlichem Material mit ersten und zweiten Enden und mit einem ersten Abschnitt und einem zweiten Abschnitt umfasst. Der erste Abschnitt wird vorbestimmten zyklischen Temperaturänderungen unterworfen, wodurch thermoelastische, martensitische Phasenumwandlungen als Reaktion auf Wärme bewirkt werden, um von einer martensitischen Phase, wenn sie sich bei einer Temperatur unterhalb eines Phasenumwandlungstemperaturbereichs befindet und ein hohes Maß an wiederherstellbarer Dehnung aufweisen kann, zu einer austenitischen Grundphase und einer Gedächtnisform überzugehen, wenn sie sich bei einer Temperatur oberhalb des Phasenumwandlungstemperaturbereichs befindet und ein niedrigeres Maß an wiederherstellbarer Dehnung aufweisen kann. Der zweite Abschnitt ist mit dem ersten Abschnitt einstückig und nicht in der Lage, Formgedächtnisreaktionen auszuführen. Der zweite Abschnitt wird nicht den vorbestimmten zyklischen Temperaturänderungen unterworfen, um die Spannung zu begrenzen, der der erste Abschnitt unterworfen wird, wenn der erste Abschnitt der temperaturempfindlichen Elemente Temperaturen oberhalb des Phasenumwandlungstemperaturbereichs unterworfen und von der martensitischen Phase in die austenitische Grundphase umgewandelt wird.

Die Druckschrift DE 10 2017 007 596 A1 offenbart eine Formgedächtnisaktuatoranordnung, umfassend einen ersten Umlenkkörper mit einer wenigstens mittelbaren Verbindung zu einem ersten Befestigungselement, einen zweiten Umlenkkörper mit einer wenigstens mittelbaren Verbindung zu einem zweiten Befestigungselement, ein einteiliges Formgedächtniselement das an seinen Enden mit dem ersten Umlenkkörper und/oder dem zweiten Umlenkkörper verbunden ist. Eine mehrfache Wicklung des einteiligen Formgedächtniselements um den ersten Umlenkkörper und den zweiten Umlenkkörper bildet eine erste Stellgliedanordnung mit ersten Stellgliedern in einer ersten Aktorebene und eine zweite Stellgliedanordnung mit zweiten Stellgliedern in einer zweiten Aktorebene, wobei die erste Aktorebene und die zweite Aktorebene einen Parallelabstand aufweisen oder zueinander in Winkelstellung stehen.

Die Druckschrift DE 10 2009 040 523 A1 offenbart eine Wärmekraftmaschine, mit einem um eine Drehachse rotierbaren Rotor, umfassend mindestens ein Formgedächtniselement, das durch Rotieren des Rotors zwischen mindestens einer Wärmequelle und mindestens einer Wärmesenke verstellbar ist, wobei dem Formgedächtniselement mindestens ein am Rotor angeordneter Energiespeicher zugeordnet ist, der in der Wärmquelle durch eine Formänderung des Formgedächtniselementes aufladbar ist und an einer definierten Umfangsposition außerhalb der Wärmequelle entladbar ist.

Die Druckschrift WO 2018/099565 A1 offenbart eine Antenne mit einem elektrischen Fernneigungsantrieb zum Antrieb eines beweglichen Phasenschiebergestänges, wobei der elektrische Fernneigungsantrieb Folgendes umfasst: eine Formgedächtnislegierungsanordnung, die an einem unbeweglichen Teil der Antenne und an dem beweglichen Phasenschiebergestänge angebracht ist, wobei die Formgedächtnislegierungsanordnung so konfiguriert ist, dass sie das bewegliche Phasenschiebergestänge angebracht ist, wobei die Anordnung aus Formgedächtnislegierung so konfiguriert ist, dass sie das bewegliche Phasenschiebergestänge in eine vorbestimmte Richtung bewegt, wenn der Anordnung aus Formgedächtnislegierung Energie zugeführt wird, und ein Gegenbewegungselement, das an dem unbeweglichen Teil der Antenne und an dem beweglichen Phasenschiebergestänge angebracht und so konfiguriert ist, dass es das bewegliche Phasenschiebergestänge in einer Richtung entgegengesetzt zu der vorbestimmten Richtung bewegt.

Die Druckschrift DE 10 2005 059 081 A1 offenbart einen Drehaktuator mit einem um eine Drehachse drehbar gelagerten Abtriebselement und mit mindestens einem ersten und zweiten am Abtriebselement angreifenden Zugelement aus Formgedächtnislegierungen, wobei die vom ersten und zweiten Zugelement am Abtriebselement bei ihrer Kontraktion erzeugten Drehmomente entgegengesetzte Drehrichtungen bezüglich der Drehachse aufweisen.

Es ist Aufgabe der vorliegenden Erfindung, ein Verfahren zur Herstellung einer thermischen Wandleranordnung zur Verfügung zu stellen, das eine verbesserte Reproduzierbarkeit, eine höhere Zuverlässigkeit und Lebensdauer der Wandleranordnung gewährleistet.

### Offenbarung der Erfindung

Diese Aufgabe wird durch das Verfahren zur Herstellung einer thermoelastischen Anordnung gemäß Anspruch 1 sowie durch die thermoelastische Anordnung gemäß dem nebengeordneten Anspruch gelöst.

Weitere Ausgestaltungen sind in den abhängigen Ansprüchen angegeben.

Gemäß einem ersten Aspekt ist ein Verfahren zur Herstellung einer thermoelastischen Anordnung für einen Energiewandler vorgesehen, wobei thermoelastische Strangelemente mit einer konstanten Dehnung zwischen mindestens zwei Halteelementen fixiert werden, um ein Bündel von sich in einer Längsrichtung erstreckenden Strangelementen mit identischen Vordehnungen zu erhalten.

Weiterhin kann das Verfahren folgende weitere Schritte aufweisen:
- Bewickeln von zwei Halteelementen mit dem thermoelastischen Endlos-Strangelement mit einer konstanten Dehnung, um ein Bündel von sich in einer Längsrichtung erstreckenden Strangelementen mit identischen Vordehnungen zu erhalten, wobei das Endlos-Strangelement wickelbar ausgebildet ist;
- Nach dem Bewickeln, Fixieren der Windungen der Strangelemente an den Halteelementen.

Eine Idee des obigen Verfahrens besteht darin, eine thermoelastische Anordnung zur Verwendung in einem Energiewandler zur Verfügung zu stellen. Diese weist Wandlerelemente auf, die jeweils aus einem Bündel von sich in einer gemeinsamen Längsrichtung erstreckenden thermoelastischen Strangelementen ausgebildet sind. Insbesondere können diese Bündel durch Umwickeln von voneinander beabstandeten Halteelemente mit einem Endlos-Strangelement hergestellt werden.

Die Strangelemente unterliegen während ihrer Nutzung in einem Energiewandler thermischen und mechanischen Belastungen, die die Geschwindigkeit der Degradation des thermoelastischen Materials beeinflussen. Insbesondere altern diejenigen Strangelemente schneller, die im Vergleich zu den übrigen Strangelementen des Bündels stärker belastet sind. Bei Bewickeln der Halteelemente mit einer konstanten Kraft ergibt sich aufgrund von Querschnittsschwankungen des Endlos-Strangelements, Schwankungen der Materialzusammensetzung und/oder Temperaturschwankungen während des Bewickelns eine Variation der Dehnungen der einzelnen Strangelemente im Bündel. Um zu gewährleisten, dass bei einem Betrieb der Wandlerelemente diese einer identischen Alterung bzw. identischen Degradation unterliegen, ist vorgesehen die Strangelemente in einem Bündel mit identischer Vordehnung anzuordnen. Dabei kann beispielsweise beim Wickeln des Endlosdrahts eine im Wesentlichen gleichbleibende Dehnung wirken, so dass die Vordehnung der so hergestellten Strangelemente im Wesentlichen gleichbleibend ist. Durch Fixieren des so gewickelten Endlos-Strangelements an den zwei voneinander beabstandeten Halteelementen kann ein Bündel aus Strangelementen erzeugt werden, dessen einzelne Strangelemente im Wesentlichen die gleiche Vordehnung aufweisen.

Das Verfahren kann die weiteren Schritte aufweisen:
- Positionieren mindestens eines Mittenhaltelements an einer Position zwischen den Halteelementen, so dass beide Windungsseiten des gewickelten Strangelements an dem mindestens einen Mittenhaltelement anliegen, und Fixieren der Windungen des Strangelements an dem Mittenhalteelement, so dass mindestens zwei Wandlerelemente zwischen dem Mittenhalteelement und einem der Halteelemente gebildet werden;
- Ausbilden des Energiewandlers durch ortsfestes Anordnen der Halteelemente und des Mittenhalteelements, so dass die durch die Bündel der Strangelemente gebildeten Wandlerelemente mit einer identischen Vordehnung versehen sind.

Durch ein Klemmen des Bündels an einer Zwischenposition mit einem Mittenhalteelement können zwei miteinander verbundene Wandlerelemente gebildet werden, die separat ansteuerbar sind und in einer antagonistischen Wandleranordnung eines Protagonist-Antagonist- Energiewandlersystem mit zwei gegeneinander wirkenden Wandlerelementen, insbesondere eines antagonistischen Aktorsystems oder einer Heiz-/Kühlvorrichtung, genutzt werden können.

Ein solches Verfahren ermöglicht eine vereinfachte reproduzierbare Fertigung und eine reproduzierbare Bewegung der Wandleranordnung ohne aufwendiges Kalibrierungsverfahren. Durch leitende Ausbildung der Halteelemente und des Mittenhalteelements ist eine einfache elektrische Ankopplung zum elektrischen Ansteuern der Strangelemente möglich.

Durch das Wickeln des Endlos-Strangelements mit konstanter Dehnung sind alle Strangelemente in gleichem Maße vorbelastet und eine unterschiedliche Beanspruchung einzelner Strangelemente in dem Bündel während des Betriebs kann vermieden werden. Eine unterschiedliche Beanspruchung einzelner Strangelemente führt zu einer erhöhten Variation der Degradation der einzelnen Strangelemente und kann zu Frühausfällen einzelner Strangelemente führen, die die Leistungsfähigkeit des Energiewandlers, insbesondere des Aktorsystems oder der Heiz-/Kühlvorrichtung, vor Ablauf einer geplanten Einsatzzeit reduzieren.

Durch das mehrfache Vorsehen von Mittenhalteelementen an mehr als zwei Positionen entlang der Längserstreckung des gewickelten Bündels von Strangelementen können auch mehr als zwei miteinander verbundene Wandlerelemente aufgebaut werden. Dies eignet sich zum Aufbau eines erweiterten Protagonist-Antagonist-Energiewandlersystems, insbesondere eines Aktorsystems. Durch die so erzeugten aneinanderhängenden Wandlerelemente kann ein mit dem Mittenhalteelement verbundenes Stellglied betätigt werden, indem beispielsweise die Wandlerelemente wechselweise aktiviert werden. Das an dem Mittenhalteelement angeordnete Stellglied kann sowohl zum Ausführen einer translatorischen Bewegung als auch zum Ausführen einer Schwenkbewegung gehalten sein.

Zudem ermöglicht das obige Verfahren das Vorsehen einer automatischen Positionierung des Strangelements durch Führungselemente an den Halteelementen, so dass ein reproduzierbares Verhalten der so hergestellten thermoelastischen Wandleranordnung erreicht werden kann.

Weiterhin kann das Bewickeln der Halteelemente mit dem Strangelement durch nebeneinander Anordnen der Windungen mit gleichbleibender Wicklungsfläche oder durch übereinander Anordnen der Windungen mit sich ändernder Wicklungsfläche durchgeführt werden.

Es kann vorgesehen sein, dass das Ausbilden des Energiewandlers als ein rotatorisches Energiewandlersystem so erfolgt, dass das Mittenhalteelement schwenkbeweglich angeordnet wird, so dass die daran fixierten Strangelemente um eine Umfangsfläche des Mittenhalteelements verlaufen, so dass durch Ausüben einer Zugkraft durch Aktivierung eines der Wandlerelemente das Mittenhalteelement verschwenkt wird oder so dass durch Verschwenken des Mittenhalteelements eines der Wandlerelemente belastet wird, wodurch sich dieses erwärmt, und/oder ein anderes der Wandlerelemente entlastet wird, wodurch dieses Wärmeenergie aufnimmt.

Gemäß einer Ausführungsform kann das Ausbilden des Energiewandlers als ein translatorisches Energiewandlersystem so erfolgen, dass das Mittenhalteelement auf einem beweglichen Schlitten angeordnet wird, wobei die daran fixierten Strangelemente in zueinander entgegengesetzten Richtungen verlaufen, so dass durch Ausüben einer Zugkraft durch Aktivierung eines der Wandlerelemente das Mittenhalteelement translatorisch bewegt wird oder so dass durch Verschieben des Mittenhalteelements eines der Wandlerelemente belastet wird, wodurch sich dieses erwärmt, und/oder ein anderes der Wandlerelemente entlastet wird, wodurch dieses Wärmeenergie aufnimmt.

Weiterhin kann das Bewickeln so durchgeführt werden, dass die Windungen nebeneinander oder übereinander angeordnet werden.

Gemäß einem weiteren Aspekt ist ein Energiewandler mit mindestens einem Wandlerelement aus einem Bündel von Strangelementen vorgesehen, die zwischen zwei Halteelementen aufgespannt sind, wobei die Strangelemente identische Dehnungen aufweisen.

Gemäß einem weiteren Aspekt ist ein Energiewandlersystem mit dem obigen Energiewandler, insbesondere als ein Aktorsystem oder ein Heiz-/Kühlsystem, vorgesehen, wobei mindestens ein Mittenhaltelement an einer Position zwischen den Halteelementen angeordnet ist, so dass mehrere seriell angeordnete Wandlerelemente ausgebildet sind, wobei das Mittenhalteelement schwenkbeweglich angeordnet wird, so dass durch Aktivierung eines der Wandlerelemente das Mittenhalteelement durch Ausüben einer Zugkraft verschwenkt wird oder so dass durch Verschwenken des Mittenhalteelements eines der Wandlerelemente belastet wird, wodurch sich dieses erwärmt, und/oder ein anderes der Wandlerelemente entlastet wird, wodurch dieses Wärmeenergie aufnimmt.

Gemäß einem weiteren Aspekt ist ein Energiewandlersystem mit dem obigen Energiewandler, insbesondere als ein Aktorsystem oder ein Heiz-/Kühlsystem, vorgesehen, wobei mindestens ein Mittenhaltelement an einer Position zwischen den Halteelementen angeordnet ist, so dass mehrere seriell angeordnete Wandlerelemente ausgebildet sind, wobei das Mittenhalteelement an einem beweglichen Schlitten angeordnet ist, wobei die daran fixierten Wandlerelemente in zueinander entgegengesetzten Richtungen verlaufen, so dass durch Ausüben einer Zugkraft durch Aktivierung eines der Wandlerelemente der Schlitten translatorisch bewegt wird oder so dass durch Verschieben des Mittenhalteelements eines der Wandlerelemente belastet wird, wodurch sich dieses erwärmt, und/oder ein anderes der Wandlerelemente entlastet wird, wodurch dieses Wärmeenergie aufnimmt.

Durch die Wandlung von Wärmeenergie in mechanische Energie kann ein solcher Energiewandler auch zur Energierückgewinnung aus warmen Medien genutzt werden.

Gemäß einem weiteren Aspekt ist ein Heiz-/Kühlsystem mit dem obigen Energiewandler vorgesehen, wobei der Energiewandler durch extern einwirkende Verformung Wärme abgibt oder Wärme aufnimmt.

Gemäß einem weiteren Aspekt ist eine Wärmekraftmaschine mit einem Energiewandler vorgesehen, wobei der Energiewandler durch gesteuerte Zuführung oder Abführung von Wärme eine mechanische Bewegung bewirkt, die als Nutzenergie verwendet wird oder in elektrische Energie gewandelt wird.

### Kurzbeschreibung der Zeichnungen

Ausführungsformen werden nachfolgend anhand der beigefügten Zeichnungen näher erläutert. Es zeigen:
- Figuren 1a-1c: verschiedene Ansichten eines rotatorischen Protagonist-Antagonist-Energiewandlersystems mit einer thermoelastischen Aktoranordnung;
- Figuren 2a-2c: verschiedene Ansichten eines translatorischen Protagonist-Antagonist-, Energiewandlersystems mit einer thermoelastischen Aktoranordnung;
- Figuren 3a-3e: Verfahrensstände zum Herstellen einer antagonistischen Wandleranordnung; und
- Figur 4: eine schematische Darstellung einer Klemmvorrichtung an einem Halteelement.

### Beschreibung von Ausführungsformen

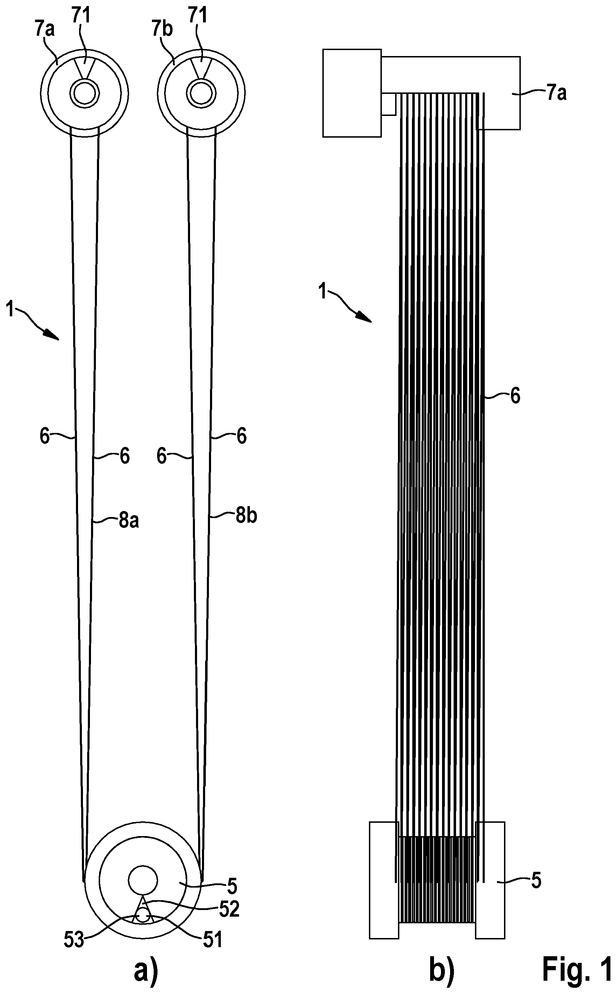

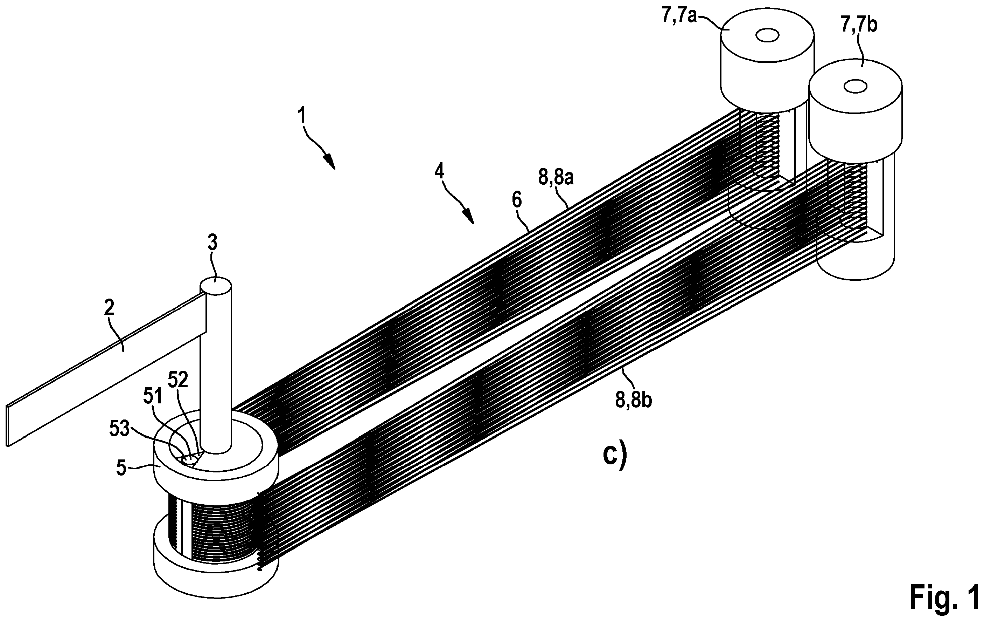

Figuren 1a -1c zeigen eine Draufsicht, eine Seitenansicht bzw. eine perspektivische Ansicht eines Energiewandlersystems 1, insbesondere zur Nutzung als ein Aktorsystem, mit einem verschwenkbaren Stellglied 2 als Beispiel für einen Energiewandler. Das verschwenkbare Stellglied 2 ist an einer Schwenkwelle 3 gehalten, die durch eine antagonistische Wandleranordnung 4 als thermoelastische Anordnung verschwenkt werden kann. Die Schwenkwelle 3 ist an einem Mittenhalteelement 5 angeordnet, wobei die Schwenkwelle 3 durch ein Drehen des Mittenhalteelements 5 verschwenkt werden kann.

Um das Mittenhalteelement 5 ist ein Bündel von thermoelastischen Strangelementen 6 geführt und dort mithilfe einer geeigneten Klemmeinrichtung 51, wie z. B. eines Klemmstiftes 53, der die Strangelemente 6 in einer Nut 52 verklemmt, fixiert. Das durch das Mittenhalteelement 6 separierte Bündel von thermoelastischen Strangelemente 6 ist an ihren anderen Enden an jeweiligen Halteelementen 7 angebracht.

An den Halteelementen 7 sind die Strangelemente 6 ebenfalls durch entsprechende Klemmelemente 71 geklemmt, so dass zwischen einem der Halteelemente 7 und dem Mittenhalteelement 6 jeweils ein Bündel von thermoelastischen Strangelementen 6 angeordnet ist, die gemeinsam ein Aktorelement als Wandlerelement 8 bilden.

Die Strangelemente 6 entsprechen länglichen schnurartigen, bandförmigen oder drahtartigen Elementen aus einem thermoelastischen Material. Die Strangelemente 6 können z.B. eine runde, elliptische oder eckige Querschnittsfläche aufweisen und sind länglich, schnur- oder bandförmig mit einer ausreichenden Biegsamkeit für eine Bewicklung der Halteelemente 7 ausgebildet.

Eine solche Wandleranordnung 4 kann als Aktoranordnung durch Aktivieren und Deaktivieren der Wandlerelemente 8 betätigt werden. Dies erfolgt durch gesteuertes Kontrahieren der Strangelemente 6 durch Erwärmen und Entspannen durch Abkühlen. Das Erwärmen kann im gezeigten Ausführungsbeispiel durch ein Zuführen elektrischer Energie erfolgen.

Alternativ kann diese Wandleranordnung 4 durch ein Einbringen einer Schwenkbewegung auf das Stellglied 2 zum Erwärmen eines der Wandlerelemente 8a, 8b und zum Abkühlen des entsprechend anderen Wandlerelements 8b, 8a führen. Dies kann in einer Heiz-/Kühlvorrichtung genutzt werden.

Zwischen dem Mittenhalteelement 5 und einem ersten der Halteelemente 7a ist ein erstes Wandlerelement 8a aus mehreren Strangelementen 6 und zwischen dem Mittenhalteelement 5 und einem zweiten Halteelement 7b ein zweites Wandlerelement 8b aus mehreren Strangelementen 6 angeordnet. Die Halteelemente 7a, 7b und das Mittenhalteelement 5 sind dazu ortsfest montiert und die Strangelemente 6 der Wandlerelemente 8a, 8b jeweils mit einer definierten, für alle Strangelemente 6 identischen Vordehnung vorgespannt.

Die Strangelemente 6 umgeben das Mittenhalteelement 5, so dass bei Zug eines der Wandlerelemente 8a, 8b aufgrund der Fixierung der Strangelemente 6 an dem Mittenhalteelement 5 ein Drehmoment auf das Mittenhalteelement 5 ausgeübt wird. Die Strangelemente 6 sind um das Mittenhalteelement 5 herumgeführt, so dass eine Ansteuerung der Wandlerelemente 8a, 8b zu zueinander entgegengesetzten Drehmomenten an dem Mittenhalteelement 5 führt.

Das thermoelastische Material des thermoelastischen Strangelements 6 kann eine Formgedächtnislegierung, wie z.B. NiTi, oder ein Polymer wie z.B. Naturkautschuk enthalten und so durch einen Phasenübergang, d.h. eine Umwandlung der Gitterstruktur, bei elastischer Verspannung oder Entspannung latente Wärme freisetzen oder aufnehmen. Üblicherweise wandelt sich bei Formgedächtnislegierungen als thermoelastischen Materialien, die unter Krafteinwirkung einer mechanischen Verformung ausgesetzt werden, eine austenitische Materialstruktur in eine martensitische Materialstruktur um, wobei diese Wärme abgibt. Wird das Material entlastet, so nimmt dieses aufgrund der elastischen Verformung die ursprüngliche Form wieder ein, wobei sich die martensitische Materialstruktur in eine austenitische Materialstruktur zurückwandelt und dabei Wärme aus der Umgebung aufnimmt. Umgekehrt kann bei Zuführung oder Abführung von Wärmeenergie das thermoelastische Strangelement 6 entspannt bzw. verspannt werden, so dass eine Kraft ausgeübt wird.

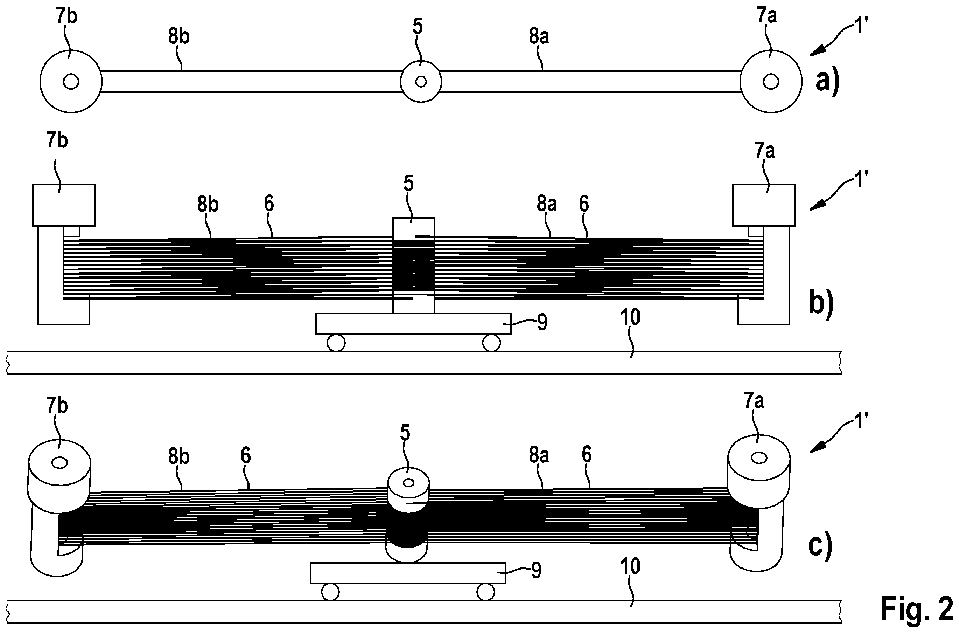

Alternativ kann, wie in der Draufsicht, der Seitenansicht und der perspektivischen Ansicht der Figuren 2a-2c gezeigt, ein translatorisches Energiewandlersystem1', insbesondere ein Aktorsystem, vorgesehen sein. Dieses weist eine antagonistische Wandleranordnung 4 auf, wie sie zuvor in Bezug zu den Figuren 1a-1c beschrieben wurde. Bei dem translatorischen Energiewandlersystem 1' ist das Mittenhalteelement 5 an einem Schlitten 9 angeordnet, der translatorisch beweglich entlang einer Führung 10, wie z.B. einer Führungsschiene, geführt ist. Die Wandlerelemente 8a, 8b erstrecken sich von dem Schlitten 9 in einander entgegengesetzte Richtungen, so dass durch Ansteuerung eines der Wandlerelemente 8a, 8b eine Zugkraft über das Mittenhalteelement 5 auf den Schlitten 9 aufgebracht wird und dieser entlang der Führung 10 bewegt wird. Die Halteelemente 7a, 7b sind dazu ortsfest montiert und die Strangelemente 6 der Wandlerelemente 8a, 8b mit identischen Dehnungen vorgespannt.

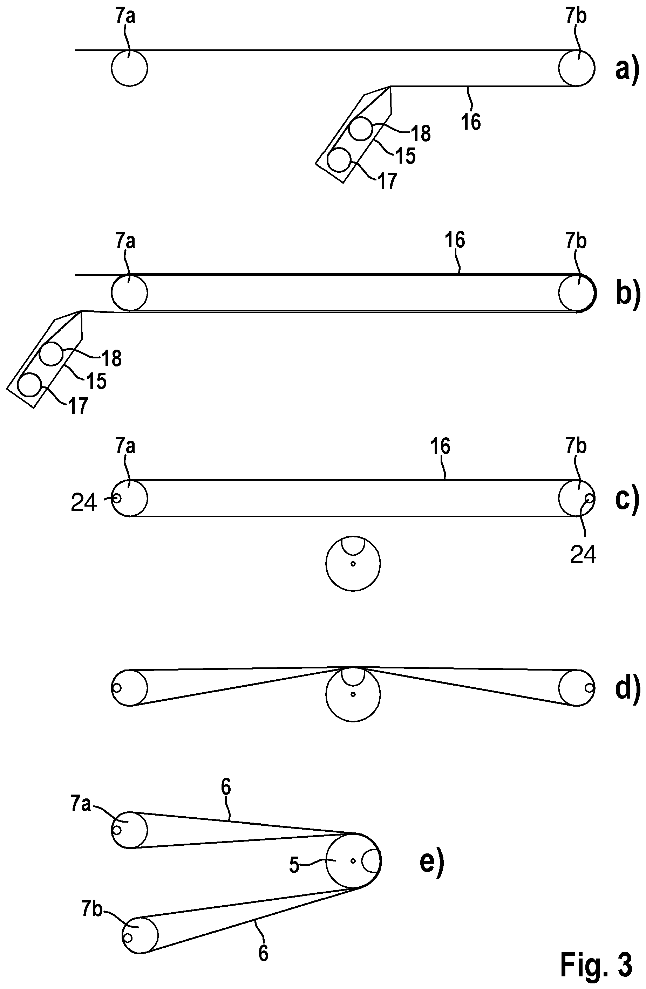

Zur Herstellung einer solchen Wandleranordnung wird ein Herstellungsverfahren verwendet, wie es anhand der Skizzen der Figuren 3a bis 3e ausführlicher dargestellt ist. Das Herstellungsverfahren für die antagonistische Wandleranordnung 4 der zuvor beschriebenen Energiewandlersysteme 1, 1' sieht zunächst das Bewickeln von zwei feststehenden, voneinander beabstandeten Halteelementen 7a, 7b vor, wie in den Figuren 3a und 3b dargestellt ist. Das Bewickeln erfolgt mithilfe einer Wicklungsvorrichtung 15, einem Endlos-Strangelemente 16, der als thermoelastischer Endlosdraht oder thermoelastische Endlosschnur aus einem thermoelastischen Material von einer Rolle 17 bereitgestellt ist.

Das Bewickeln der Halteelemente 7a, 7b kann bei gleichbleibender Vordehnung erfolgen, wobei die Drahtwindungen nebeneinander- und/oder übereinandergelegt werden.

Die Wicklungsvorrichtung 15 weist neben der Rolle 17 eine Dehnungsrolle 18 auf, die sich zum Bereitstellen einer konstanten Dehnung beim Abwickeln des Endlos-Strangelements 16 von der Rolle 17 mit einer Geschwindigkeit dreht, die eine größeren Strangdurchlaufgeschwindigkeit aufweist als eine Strangabspulgeschwindigkeit der Rolle 17. Dadurch wird das Endlos-Strangelement 16 zwischen der Rolle 17 und der Dehnungsrolle beim Abspulen um eine definierte Länge gedehnt, bevor das Endlos-Strangelement 16 auf die Halteelement gewickelt wird. Die Bewicklung um die Halteelemente 7 erfolgt mit einer Geschwindigkeit, die die Dehnung des Endlos-Strangelements 16 nach dem Verlassen der Dehnungsrolle 18 beibehält, d.h. der bewickelte Weg um die Halteelemente 7 entspricht der Strangdurchlaufgeschwindigkeit der Dehnungsrolle 18. Um eine ausreichende Haftung des Endlos-Strangelements 16 auf der Dehnungsrolle 18 zu gewährleisten, kann dieses mehrfach die Dehnungsrolle 18 umlaufen.

In Figur 3c ist dargestellt, dass nach Beenden der Bewicklung der Halteelemente 7a, 7b die umlaufenden Windungsseiten des Endlos-Strangelements 16 an den Halteelementen 7a, 7b mit einer Fixierung 24 fixiert werden. Dies kann durch Klemmen, Kleben, Löten, Schweißen (Laserschweißen und Widerstandsschweißen) oder in sonstiger Weise erfolgen. Die Fixierung erfolgt so, dass eine gemeinsame elektrische Kontaktierung der durch die Windungen gebildeten Bündel an Strangelementen 6 möglich ist. Dazu können beispielsweise die Halteelemente 7a, 7b aus einem metallischen oder sonstigen leitfähigen Material ausgebildet sein.

Nach dem Bewickeln der Halteelemente 7a, 7b kann, wie in den Figuren 3c und 3d gezeigt, das Mittenhalteelement 5 quer zur Längserstreckung der Strangelemente 6 an einer Position zwischen den Halteelementen 7a, 7b an die Strangelemente 6 geführt werden. Sobald alle Strangelemente 6 an dem Mittenhalteelement 5 anliegen, können diese daran befestigt werden, insbesondere durch Klemmen, Kleben, Löten, Schweißen oder in sonstiger Weise. Wie in der Figur 3d gezeigt, kann dies durch Klemmen, z. B. mit dem Klemmstift 53 in der Nut 52, erfolgen.

In einer alternativen Ausführungsform kann das eine oder die mehreren Mittenhalteelemente schon in dem Wickelprozess als passives Element integriert werden, so dass das Endlos-Strangelement 16 um das Mittenhalteelement herumgewickelt wird. Das Fixieren der einzelnen Strangelemente 6 an dem Mittenhalteelement 5 erfolgt dann beidseitig des Mittenhalteelements 5 durch Klemmen, Kleben, Löten, Schweißen und dergleichen.

Je nach Anwendung können die Strangelemente 6 teilweise um eine Umfangsfläche des Mittenhalteelements 5 geführt werden, so dass eine Zugkraft der Strangelemente 6 in eine Rotation des Mittenhalteelements 5 umgesetzt wird.

In einem Schritt 3e werden die Halteelemente 7a, 7b in dem Energiewandlersystem 1 fixiert und das Mittenhalteelement 5 mit dem Stellglied an einer Welle oder Achse montiert oder mit dem Schlitten 9 verbunden. Die Halteelemente 7a, 7b werden so positioniert, dass die Strangelemente 6 zwischen dem Mittenhalteelement 5 und dem jeweiligen Halteelement 7a, 7b mit einer vorgegebenen Vordehnung versehen sind. Durch die Fixierung der Strangelemente 6 an den Halteelementen 7a, 7b und an dem Mittenhalteelement 5 kann die Anordnung der Strangelemente 6 spielfrei gestaltet werden und diese in jedem der Wandlerelemente 8a, 8b mit identischen Vordehnungen bzw. identischen Längen versehen werden. Auch ermöglicht die gemeinsame Anordnung der Strangelemente 6 durch eine Bewicklung von zwei Halteelementen 7a, 7b ein einfaches Fertigungssystem für die Herstellung eines rotatorischen oder translatorischen Energiewandlersystems 1, 1' mit einer antagonistischen Wandleranordnung 4.

Das Energiewandlersystem 1, 1' kann als Aktorsystem bei gesteuerter Erwärmung eines der Wandlerelemente 8 oder als Heiz-/Kühlvorrichtung bei mechanischer rotatorischer oder translatorischer Bewegung des Mittenhalteelements 5 verwendet werden. In einer weiteren Ausführungsform kann eine weitere Energiewandlung der durch die gesteuerte Erwärmung bewirkten mechanischen Bewegung z.B. in elektrische Energie vorgesehen werden.

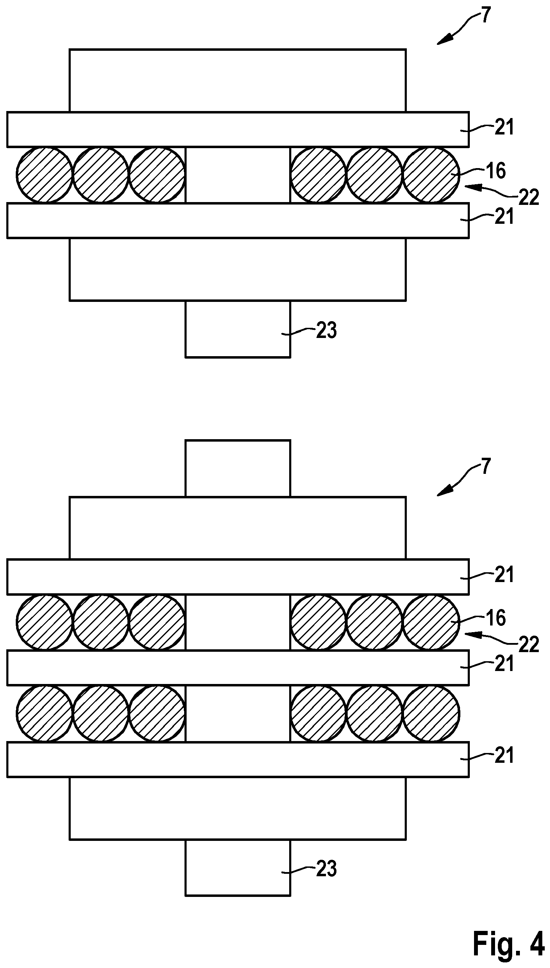

In Figur 4 sind beispielhaft Querschnittsansicht von möglichen Halteelementen 7 dargestellt. Beim Bewickeln wird das Endlos-Strangelement 16 in zwischen verschiebbaren parallel zueinander angeordneten Plättchen 21 gebildeten Nuten 22 geführt. Dies kann in einer oder mehreren Lagen erfolgen. Durch Pressen der Plättchen 21 quer zur ihren Flächenrichtungen, beispielsweise durch Festziehen einer Schraube 23 werden die Plättchen 21 gegeneinandergepresst und die darin gehaltenen Strangelemente 6 verklemmt.

### Bezugszeichenliste

- 1: Energiewandlersystem
- 2: Stellglied
- 3: Schwenkwelle
- 4: antagonistische Wandleranordnung
- 5: Mittenhalteelement
- 51: Klemmeinrichtung
- 53: Klemmstift
- 52: Nut
- 6: Strangelement
- 7: Halteelemente
- 7a, 7b: erstes, zweites Halteelement
- 71: Klemmelemente
- 8: Wandlerelement
- 8a, 8b: erstes, zweites Wandlerelement
- 9: Schlitten
- 10: Führung
- 15: Wicklungsvorrichtung
- 16: Endlos-Strangelement
- 17: Drahtrolle
- 18: Dehnungsrolle
- 21: Plättchen
- 22: Nuten
- 23: Schraube
- 24: Fixierung

## Patentansprüche

1. Verfahren zur Herstellung einer thermoelastischen Anordnung für einen Energiewandler, **dadurch gekennzeichnet, dass** thermoelastische Strangelemente (6) mit einer konstanten Dehnung zwischen mindestens zwei Halteelementen (7, 7a, 7b) fixiert werden, um ein Bündel von sich in einer Längsrichtung erstreckenden Strangelementen (6) mit identischen Vordehnungen zu erhalten.

2. Verfahren nach Anspruch 1, mit den Schritten:
- Bewickeln von zwei Halteelementen (7, 7a, 7b) mit dem thermoelastischen Endlos-Strangelement (16) mit einer konstanten Dehnung, um ein Bündel von sich in einer Längsrichtung erstreckenden Strangelementen (6) mit identischen Vordehnungen zu erhalten, wobei das Endlos-Strangelement (16) wickelbar ausgebildet ist;
- Nach dem Bewickeln, Fixieren der Windungen der Strangelemente (6) an den Halteelementen (7, 7a, 7b).

3. Verfahren nach Anspruch 2, wobei das Bewickeln der Halteelemente (7, 7a, 7b) mit dem Endlos-Strangelement (16) durch nebeneinander Anordnen der Windungen mit gleichbleibender Wicklungsfläche oder durch übereinander Anordnen der Windungen mit sich ändernder Wicklungsfläche durchgeführt wird.

4. Verfahren nach einem der Ansprüche 1 bis 3, mit den weiteren Schritten:
- Positionieren mindestens eines Mittenhaltelements (5) an einer Position zwischen den Halteelementen (7, 7a, 7b), so dass beide Windungsseiten des gewickelten Strangelements (16) an dem mindestens einen Mittenhaltelement (5) anliegen, und Fixieren der Windungen des Strangelements (16) an dem Mittenhalteelement (5), so dass mindestens zwei Wandlerelemente (8, 8a, 8b) zwischen dem Mittenhalteelement (5) und einem der Halteelemente (7, 7a, 7b) gebildet werden;
- Ausbilden des Energiewandlers durch ortsfestes Anordnen der Halteelemente (7, 7a, 7b) und des Mittenhalteelements (5), so dass die durch die Bündel der Strangelemente (6) gebildeten Wandlerelemente (8, 8a, 8b) mit einer identischen Vordehnung versehen sind.

5. Verfahren nach Anspruch 4, wobei das Ausbilden des Energiewandlers als ein rotatorisches Energiewandlersystem (1) so erfolgt, dass das Mittenhalteelement (5) schwenkbeweglich angeordnet wird, so dass die daran fixierten Strangelemente (6) der Wandlerelemente (8, 8a, 8b) um eine Umfangsfläche des Mittenhalteelements (5) verlaufen, so dass durch Ausüben einer Zugkraft das Mittenhalteelement (5) durch Aktivierung eines der Wandlerelemente (8, 8a, 8b) verschwenkt wird oder so dass durch Verschwenken des Mittenhalteelements (5) eines der Wandlerelemente (8, 8a, 8b) belastet wird, wodurch sich dieses erwärmt, und/oder ein anderes der Wandlerelemente (8, 8a, 8b) entlastet wird, wodurch dieses Wärmeenergie aufnimmt.

6. Verfahren nach Anspruch 4, wobei das Ausbilden des Energiewandlers als ein translatorisches Energiewandlersystem (1) so erfolgt, dass das Mittenhalteelement (5) auf einem beweglichen Schlitten (9) angeordnet wird, wobei die daran fixierten Strangelemente (6) der Wandlerelemente (8, 8a, 8b) in zueinander entgegengesetzten Richtungen verlaufen, so dass durch Ausüben einer Zugkraft das Mittenhalteelement (5) durch Aktivierung eines der Wandlerelemente (8, 8a, 8b) translatorisch bewegt wird oder so dass durch Verschieben des Mittenhalteelements (5) eines der Wandlerelemente (8, 8a, 8b) belastet wird, wodurch sich dieses erwärmt, und/oder ein anderes der Wandlerelemente (8, 8a, 8b) entlastet wird, wodurch dieses Wärmeenergie aufnimmt.

7. Verfahren nach einem der Ansprüche 2 bis 3, wobei das Bewickeln so durchgeführt wird, dass die Windungen nebeneinander oder übereinander angeordnet werden.

8. Energiewandler mit mindestens einem Wandlerelement (8, 8a, 8b) aus einem Bündel von thermoelastischen Strangelementen (6), die zwischen zwei Halteelementen (7, 7a, 7b) aufgespannt sind, wobei die Strangelemente (6) identische Dehnungen aufweisen.

9. Energiewandlersystem (1), insbesondere ein Aktorsystem oder eine Heiz-/Kühlvorrichtung, mit einem Energiewandler nach Anspruch 8, wobei mindestens ein Mittenhaltelement (5) an einer Position zwischen den Halteelementen (7, 7a, 7b) angeordnet ist, so dass mehrere seriell angeordnete Wandlerelemente ausgebildet sind, wobei das Mittenhalteelement (5) schwenkbeweglich angeordnet wird, so dass durch Aktivierung eines der Wandlerelemente (8, 8a, 8b) das Mittenhalteelement (5) durch Ausüben einer Zugkraft verschwenkt wird oder so dass durch Verschwenken des Mittenhalteelements (5) eines der Wandlerelemente (8, 8a, 8b) belastet wird, wodurch sich dieses erwärmt, und/oder ein anderes der Wandlerelemente (8, 8a, 8b) entlastet wird, wodurch dieses Wärmeenergie aufnimmt.

10. Energiewandlersystem (1), insbesondere ein Aktorsystem oder eine Heiz-/Kühlvorrichtung, mit einem Energiewandler nach Anspruch 8, wobei mindestens ein Mittenhaltelement (5) an einer Position zwischen den Halteelementen (7, 7a, 7b) angeordnet ist, so dass mehrere seriell angeordnete Wandlerelemente (8, 8a, 8b) ausgebildet sind, wobei das Mittenhalteelement (5) an einem beweglichen Schlitten angeordnet ist, wobei die daran fixierten Wandlerelemente (8, 8a, 8b) in zueinander entgegengesetzten Richtungen verlaufen, so dass durch Ausüben einer Zugkraft der Schlitten durch Aktivierung eines der Wandlerelemente (8, 8a, 8b) translatorisch bewegt wird oder so dass durch Verschieben des Mittenhalteelements (5) eines der Wandlerelemente (8, 8a, 8b) belastet wird, wodurch sich dieses erwärmt, und/oder ein anderes der Wandlerelemente (8, 8a, 8b) entlastet wird, wodurch dieses Wärmeenergie aufnimmt.

11. Heiz-/Kühlvorrichtung mit einem Energiewandler nach Anspruch 8, wobei der Energiewandler durch extern einwirkende Verformung Wärme abgibt oder Wärme aufnimmt.

12. Aktorsystem mit einem Energiewandler nach Anspruch 8, wobei der Energiewandler durch Zuführung oder Abführung von Wärme zu den Wandlerelementen (8, 8a, 8b) eine mechanische Verformung bewirkt, mit der ein Stellglied (2) bewegt wird.

13. Wärmekraftmaschine mit einem Energiewandler nach Anspruch 8, wobei der Energiewandler durch gesteuerte Zuführung oder Abführung von Wärme eine mechanische Bewegung bewirkt, die als Nutzenergie verwendet wird oder in elektrische Energie gewandelt wird.

## Claims

1. A method for producing a thermoelastic arrangement for an energy converter, **characterized in that** thermoelastic strand elements (6) are fixed with a constant strain between at least two holding elements (7, 7a, 7b), in order to obtain a bundle of strand elements (6) extending in a longitudinal direction with identical pre-strain.

2. The method according to claim 1, comprising the steps of:
winding two holding elements (7, 7a, 7b) with the thermoelastic continuous strand element (16) with a constant strain, in order to obtain a bundle of strand elements (6) extending in a longitudinal direction with identical pre-strains, wherein the continuous strand element (16) is configured to be windable;
after the winding, fixing the windings of the strand elements (6) to the holding elements (7, 7a, 7b).

3. The method according to claim 2, wherein the winding of the holding elements (7, 7a, 7b) with the continuous strand element (16) is carried out by arranging the windings next to one another with a constant winding surface or by arranging the windings one above the other with a varying winding surface.

4. The method according to any one of claims 1 to 3, comprising the further steps of:
positioning at least one center holding element (5) at a position between the holding elements (7, 7a, 7b), such that both winding sides of the wound strand element (16) abut against said at least one center holding element (5), and fixing the windings of the strand element (16) to the center holding element (5), such that at least two converter elements (8, 8a, 8b) are formed between the center holding element (5) and one of the holding elements (7, 7a, 7b);
forming the energy converter by fixedly arranging the holding elements (7, 7a, 7b) and the center holding element (5), such that the converter elements (8, 8a, 8b) formed by the bundles of strand elements (6) are provided with an identical pre-strain.

5. The method according to claim 4, wherein the forming of the energy converter as a rotary energy converter system (1) is carried out such that the center holding element (5) is arranged to be pivotable, such that the strand elements (6) of the converter elements (8, 8a, 8b) fixed thereto extend around a peripheral surface of the center holding element (5), such that by exerting a tensile force, the center holding element (5) is pivoted by activation of one of the converter elements (8, 8a, 8b) or such that by pivoting the center holding element (5), one of the converter elements (8, 8a, 8b) is loaded, whereby it heats up, and/or another of the converter elements (8, 8a, 8b) is unloaded, whereby it absorbs thermal energy.

6. The method according to claim 4, wherein the forming of the energy converter as a translatory energy converter system (1) is carried out such that the center holding element (5) is arranged on a movable carriage (9), wherein the strand elements (6) of the converter elements (8, 8a, 8b) fixed thereto extend in mutually opposite directions, such that by exerting a tensile force, the center holding element (5) is moved in translation by activation of one of the converter elements (8, 8a, 8b) or such that by displacing the center holding element (5), one of the converter elements (8, 8a, 8b) is loaded, whereby it heats up, and/or another of the converter elements (8, 8a, 8b) is unloaded, whereby it absorbs thermal energy.

7. The method according to any one of claims 2 to 3, wherein the winding is carried out such that the windings are arranged next to one another or one above the other.

8. An energy converter with at least one converter element (8, 8a, 8b) consisting of a bundle of thermoelastic strand elements (6) which are tensioned between two holding elements (7, 7a, 7b), wherein the strand elements (6) have identical strains.

9. An energy converter system (1), in particular an actuator system or a heating/cooling device, with an energy converter according to claim 8, wherein at least one center holding element (5) is arranged at a position between the holding elements (7, 7a, 7b), such that several serially arranged converter elements are formed, wherein the center holding element (5) is arranged to be pivotable, such that by activation of one of the converter elements (8, 8a, 8b), the center holding element (5) is pivoted by exerting a tensile force or such that by pivoting the center holding element (5), one of the converter elements (8, 8a, 8b) is loaded, whereby it heats up, and/or another of the converter elements (8, 8a, 8b) is unloaded, whereby it absorbs thermal energy.

10. An energy converter system (1), in particular an actuator system or a heating/cooling device, with an energy converter according to claim 8, wherein at least one center holding element (5) is arranged at a position between the holding elements (7, 7a, 7b), such that several serially arranged converter elements (8, 8a, 8b) are formed, wherein the center holding element (5) is arranged on a movable carriage, wherein the converter elements (8, 8a, 8b) fixed thereto extend in mutually opposite directions, such that by exerting a tensile force, the carriage is moved in translation by activation of one of the converter elements (8, 8a, 8b) or such that by displacing the center holding element (5), one of the converter elements (8, 8a, 8b) is loaded, whereby it heats up, and/or another of the converter elements (8, 8a, 8b) is unloaded, whereby it absorbs thermal energy.

11. A heating/cooling device with an energy converter according to claim 8, wherein the energy converter releases heat or absorbs heat by externally applied deformation.

12. An actuator system with an energy converter according to claim 8, wherein the energy converter causes a mechanical deformation by supplying or removing heat to/from the converter elements (8, 8a, 8b), with which an actuating member (2) is moved.

13. A heat engine with an energy converter according to claim 8, wherein the energy converter causes a mechanical movement by controlled supply or removal of heat, which is used as useful energy or which is converted into electrical energy.

## Revendications

1. Procédé de fabrication d'un agencement thermoélastique pour un convertisseur d'énergie, **caractérisé en ce que** des éléments de brin thermoélastiques (6) sont fixés avec un allongement constant entre au moins deux éléments de maintien (7, 7a, 7b), afin d'obtenir un faisceau d'éléments de brin (6) s'étendant dans une direction longitudinale et présentant des pré-allongements identiques.

2. Procédé selon la revendication 1, comprenant les étapes suivantes :
enrouler deux éléments de maintien (7, 7a, 7b) avec l'élément de brin continu thermoélastique (16) avec un allongement constant, afin d'obtenir un faisceau d'éléments de brin (6) s'étendant dans une direction longitudinale avec des pré-allongements identiques, l'élément de brin continu (16) étant conçu pour être enroulable ;
après l'enroulement, fixer les spires des éléments de brin (6) aux éléments de maintien (7, 7a, 7b).

3. Procédé selon la revendication 2, dans lequel l'enroulement des éléments de maintien (7, 7a, 7b) avec l'élément de brin continu (16) est effectué en disposant les spires côte à côte avec une surface d'enroulement constante ou en disposant les spires les unes sur les autres avec une surface d'enroulement variable.

4. Procédé selon l'une des revendications 1 à 3, comprenant les étapes supplémentaires suivantes :
positionner au moins un élément de maintien central (5) à une position entre les éléments de maintien (7, 7a, 7b), de sorte que les deux côtés de spire de l'élément de brin enroulé (16) soient en appui contre ledit au moins un élément de maintien central (5), et fixer les spires de l'élément de brin (16) à l'élément de maintien central (5), de sorte qu'au moins deux éléments de convertisseur (8, 8a, 8b) soient formés entre l'élément de maintien central (5) et l'un des éléments de maintien (7, 7a, 7b) ;
former le convertisseur d'énergie en disposant de manière fixe les éléments de maintien (7, 7a, 7b) et l'élément de maintien central (5), de sorte que les éléments de convertisseur (8, 8a, 8b) formés par les faisceaux d'éléments de brin (6) soient pourvus d'une pré-allongements identiques.

5. Procédé selon la revendication 4, dans lequel la formation du convertisseur d'énergie en tant que système de convertisseur d'énergie rotatif (1) est effectuée de telle sorte que l'élément de maintien central (5) soit disposé de manière pivotante, de sorte que les éléments de brin (6) des éléments de convertisseur (8, 8a, 8b) fixés sur celui-ci s'étendent autour d'une surface périphérique de l'élément de maintien central (5), de sorte que par l'exercice d'une force de traction, l'élément de maintien central (5) soit pivoté par l'activation de l'un des éléments de convertisseur (8, 8a, 8b) ou de sorte que par le pivotement de l'élément de maintien central (5), l'un des éléments de convertisseur (8, 8a, 8b) soit chargé, ce qui entraîne son échauffement, et/ou un autre des éléments de convertisseur (8, 8a, 8b) soit déchargé, ce qui entraîne l'absorption d'énergie thermique par celui-ci.

6. Procédé selon la revendication 4, dans lequel la formation du convertisseur d'énergie en tant que système de convertisseur d'énergie translatif (1) est effectuée de telle sorte que l'élément de maintien central (5) soit disposé sur un chariot mobile (9), les éléments de brin (6) des éléments de convertisseur (8, 8a, 8b) fixés sur celui-ci s'étendant dans des directions opposées l'une à l'autre, de sorte que par l'exercice d'une force de traction, l'élément de maintien central (5) soit déplacé de manière translative par l'activation de l'un des éléments de convertisseur (8, 8a, 8b) ou de sorte que par le déplacement de l'élément de maintien central (5), l'un des éléments de convertisseur (8, 8a, 8b) soit chargé, ce qui entraîne son échauffement, et/ou un autre des éléments de convertisseur (8, 8a, 8b) soit déchargé, ce qui entraîne l'absorption d'énergie thermique par celui-ci.

7. Procédé selon l'une des revendications 2 à 3, dans lequel l'enroulement est effectué de telle sorte que les spires soient disposées côte à côte ou les unes sur les autres.

8. Convertisseur d'énergie avec au moins un élément de convertisseur (8, 8a, 8b) constitué d'un faisceau d'éléments de brin thermoélastiques (6) qui sont tendus entre deux éléments de maintien (7, 7a, 7b), les éléments de brin (6) présentant des allongements identiques.

9. Système de convertisseur d'énergie (1), en particulier un système d'actionnement ou un dispositif de chauffage/refroidissement, avec un convertisseur d'énergie selon la revendication 8, dans lequel au moins un élément de maintien central (5) est disposé à une position entre les éléments de maintien (7, 7a, 7b), de sorte que plusieurs éléments de convertisseur disposés en série soient formés, l'élément de maintien central (5) étant disposé de manière pivotante, de sorte que par l'activation de l'un des éléments de convertisseur (8, 8a, 8b), l'élément de maintien central (5) soit pivoté par l'exercice d'une force de traction ou de sorte que par le pivotement de l'élément de maintien central (5), l'un des éléments de convertisseur (8, 8a, 8b) soit chargé, ce qui entraîne son échauffement, et/ou un autre des éléments de convertisseur (8, 8a, 8b) soit déchargé, ce qui entraîne l'absorption d'énergie thermique par celui-ci.

10. Système de convertisseur d'énergie (1), en particulier un système d'actionnement ou un dispositif de chauffage/refroidissement, avec un convertisseur d'énergie selon la revendication 8, dans lequel au moins un élément de maintien central (5) est disposé à une position entre les éléments de maintien (7, 7a, 7b), de sorte que plusieurs éléments de convertisseur (8, 8a, 8b) disposés en série soient formés, l'élément de maintien central (5) étant disposé sur un chariot mobile, les éléments de convertisseur (8, 8a, 8b) fixés sur celui-ci s'étendant dans des directions opposées l'une à l'autre, de sorte que par l'exercice d'une force de traction, le chariot soit déplacé de manière translative par l'activation de l'un des éléments de convertisseur (8, 8a, 8b) ou de sorte que par le déplacement de l'élément de maintien central (5), l'un des éléments de convertisseur (8, 8a, 8b) soit chargé, ce qui entraîne son échauffement, et/ou un autre des éléments de convertisseur (8, 8a, 8b) soit déchargé, ce qui entraîne l'absorption d'énergie thermique par celui-ci.

11. Dispositif de chauffage/refroidissement avec un convertisseur d'énergie selon la revendication 8, dans lequel le convertisseur d'énergie dégage de la chaleur ou absorbe de la chaleur par déformation appliquée de manière externe.

12. Système d'actionnement avec un convertisseur d'énergie selon la revendication 8, dans lequel le convertisseur d'énergie provoque une déformation mécanique par l'apport ou l'évacuation de chaleur aux éléments de convertisseur (8, 8a, 8b), avec laquelle un organe de réglage (2) est déplacé.

13. Moteur thermique avec un convertisseur d'énergie selon la revendication 8, dans lequel le convertisseur d'énergie provoque un mouvement mécanique par l'apport ou l'évacuation contrôlé de chaleur, qui est utilisé comme énergie utile ou qui est converti en énergie électrique.
